(19) Europäisches Patentamt
European Patent Office
Office européen des brevets

(11) Publication number: **0 065 789**
**B1**

(12) # EUROPEAN PATENT SPECIFICATION

(45) Date of publication of patent specification: **18.09.85**

(51) Int. Cl.[4]: **C 07 C 101/02,** A 01 N 37/44

(21) Application number: **82200465.1**

(22) Date of filing: **16.04.82**

(54) **Use of aminoacid compounds as plant growth promoters and plant growth promoting composition.**

(30) Priority: **26.05.81 IT 2195981**

(43) Date of publication of application:
**01.12.82 Bulletin 82/48**

(45) Publication of the grant of the patent:
**18.09.85 Bulletin 85/38**

(84) Designated Contracting States:
**AT BE CH DE FR GB LI LU NL SE**

(56) References cited:

**CHEMICAL ABSTRACTS, vol. 72, no. 1, 5th January 1970, page 14, no. 186b, Columbus, Ohio, USA**
**CHEMICAL ABSTRACTS, vol. 91, no. 15, 8th October 1979, page 371, no. 121016x, Columbus, Ohio, USA**

(73) Proprietor: **Curti, Maria**
**Via Riviera, 52**
**I-27020 Torre d'Isola Pavia (IT)**
(73) Proprietor: **Fussi, Fernando**
**Via Foscolo, 31**
**I-20050 Lesmo Milano (IT)**

(72) Inventor: **Curti, Maria**
**Via Riviera, 52**
**I-27020 Torre d'Isola Pavia (IT)**
Inventor: **Fussi, Fernando**
**Via Foscolo, 31**
**I-20050 Lesmo Milano (IT)**

(74) Representative: **Appoloni, Romano et al**
**Ing. Barzanò & Zanardo S.p.A. Via Borgonuovo 10**
**I-20121 Milano (IT)**

**EP 0 065 789 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention proposes compounds adapted to promote plant growth; in particular, according to the invention, compounds are considered which are suitable to be applied to crops in combination with fertilizer substances, so as to supplement the effects of these.

It has long been known that polyamino derivatives induce cell multiplication; three such derivatives are putrescine ($H_2N(CH_2)_4NH_2$), spermine ($H_2N(CH_2)_3-NH(CH_2)_4-NH(CH_2)_3NH_2$) and spermidine ($H_2N(CH_2)_3NH(CH_2)_4NH_2$).

It is on the other hand also known that these polyamino compounds are metabolized, by known enzymes such as diamine oxidase (DAO), to oxidized products (amino-aldehydes) with characteristics of toxicity and other adverse reactions which prevent their use.

One object of the invention is therefore to provide compounds possessing elevated plant growth promotion activity the metabolites of which, formed during the plant growth process, are devoid of toxicity and biodegradability.

A further object of the invention is to provide compounds which, when combined with fertilizers for the treatment of plants, promote plant cellular reproduction by a mechanism of improved absorption and utilization of said fertilizers, so as to reduce the quantity in which they are normally employed.

In this regard, it may be observed that in the technique at present in use the ratio between the weight of the fertilizers initially applied to the crops and the weight of same found in the grown species tends to be increasingly high.

This brings the double disadvantage of an increasing economic burden for the growers and a waste of chemical products which chiefly disperse and accumulate in the environment, with consequent ecological damage.

To attain the aforesaid objects, the present invention proposes the use as plant growth promoters of the compounds of general formula:

$$X-(R)_m-NH-(R')_n-COOH$$

wherein: X=COOH or $NH_2$; m is an integer between 2 and 6, and n=2 or 3, and R and R' represent a straight or branched alkylene chain.

The compounds of the invention are amino acids, mono- or di-carboxylic derivatives. The molecular formulae of some of such compounds are given below as non-restrictive examples:

$$NH_2-(CH_2)_3-NH-(CH_2)_3-COOH$$

$$NH_2-(CH_2)_4-NH-(CH_2)_2-COOH$$

$$HOOC-(CH_2)_3-NH-(CH_2)_2-COOH$$

$$NH_2-(CH_2)_2-\overset{\overset{\displaystyle CH_3}{|}}{C}H-NH-(CH_2)_3-COOH$$

$$HOOC-(CH_2)_3NH-\overset{\overset{\displaystyle CH_3}{|}}{C}H-CH_2-COOH$$

Some of these compounds have already been isolated as natural metabolytes (see Ch. Abs. Vol. 72, No. 1, Jan. 5, 1970, No. 186b and Vol. 91, No. 15, October 8, 1979; No. 121016 x) but never claimed to show a plant growth promotion activity.

The said compounds are prepared by a two-step reaction characterized by a first condensation step in basic medium, known in preparative organic chemistry as "cyanethylation" (Reppe chemistry), follwed by reduction or by hydrolysis of the cyanide group, depending on whether it is wished to obtain an amino group or a carboxyl group. The condensing agents can be acrylonitrile or crotonitrile, which are condensed on diamines or ω-amino acids in open, i.e. lactam form.

If aminoacids of general formula $X-(R)_m-NH-(R')_n-COOH$ with n=2 or n=3 (branched chain) and X=$NH_2$ or COOH, are prepared, instead of employing cyanethylation follwed by hydrolysis, it is of course possible to operate with the free unsaturated acid, that is to say with acrylic acid or crotonic acid respectively.

The intermediates or finished products are isolated by techniques known to those skilled in the art. Qualitative analytical identification is by thin layer chromatography, using ninhydrin as detector and quantitative analytical identification is by alkalimetric titration or by separation via dansylation.

The supplements according to the present invention have undergone variously oriented trials.

The following materials were used in the trials:

— aqueous solution of standard fertilizer containing 1 g/l of a mixture with a content of N, P, K=17, 17, 17 and complete with microelements, surfactants and chelating agents;
— washed river sand;
— chestnut-wood humus;
— polyaminoacid derivatives;
— young *Hedera helix* var. Fantasia plants;
— medium-sized *Scheffera* plants;
— medium-sized *Aralia simboldi* plants;
— adult *Syngonium podofillum* plants;
— pre-flowering *Kalanchoe* plants;
— scions of *Tradescantia zebrina*.

Example 1

Thirty-five young *Hedera helix* var. Fantasia plants from the same hothouse and of similar size, were freed of the humus surrounding their roots by careful washing and planted in washed river sand, with a distribution of 5 plants per pot, for a total of 7 pots.

The pots were marked respectively as follows:

A —treatment with standard fertilizer solution only;

$B_1$—treatment with standard fertilizer solution+0.1 mg/litre of

$$NH_2—(CH_2)_3—NH—(CH_2)_3—COOH;$$

$B_2$—treatment with standard fertilizer solution+1 mg/litre of

$$NH_2—(CH_2)_3—NH—(CH_2)_3—COOH;$$

$C_1$—treatment with standard fertilizer solution+0.1 mg/litre of

$$NH_2—(CH_2)_4—NH—(CH_2)_2—COOH;$$

$C_2$—treatment with standard fertilizer solution+1 mg/litre of

$$NH_2—(CH_2)_4—NH—(CH_2)_2—COOH;$$

$D_1$—treatment with standard fertilizer solution+0.1 mg/litre of

$$HOOC—(CH_2)_3—NH—(CH_2)_2—COOH;$$

$D_2$—treatment with standard fertilizer solution+1 mg/litre of

$$HOOC—(CH_2)_3—NH—(CH_2)_2—COOH.$$

After an eight-day acclimatization period, the plants maintained in a closed environment at a temperature of between 15 and 20°C with uniform natural lighting, were each given a weekly administration of 100 cc of each of the aforesaid solutions.

Careful nebulization and watering was effected to keep the substrate in permanently good conditions of moisture.

After eight treatments, the plants $B_2$, $C_2$, $D_2$ already showed signs of a considerably greater vigour than the plants A; after twelve treatment leaf measurements were made and size increases ranging from 80 to 120% were recorded.

After twelve treatments the plants marked $B_1$, $C_1$; $D_1$ differed from the plants A and, after sixteen treatments, leaf size increases ranging from 60 to 80% were recorded.

Following on the results of this trial and those of the aforesaid leaf measurements, it was presumed that the effect of cellular multiplication would occur not only in *Hedera helix*, but in all other ornamental or flowering plants.

Further trials were run to confirm this.

Example 2

In this case, too, the plants were from the same source and of similar size in each of the different species.

4 *Scheffera* plants (h=70 cm approx.)
4 *Aralia simboldi* plants (h=50 cm approx.)

4 pre-flowering *Kolanchoe* plants were freed of the humus around the roots by careful washing and were re-planted in pots containing a 1:1 mixture of washed river sand and chestnut-wood humus.

The pots were marked respectively as follows:

A—treatment with the standard fertilizer solution alone;

B—treatment with standard fertilizer solution+1 mg/litre of

$$NH_2-(CH_2)_3-NH-(CH_2)_3-COOH;$$

C—treatment with standard fertilizer solution+1 mg/litre of

$$NH_2-(CH_2)_4-NH-(CH_2)_2-COOH;$$

D—treatment with standard fertilizer solution+1 mg/litre of

$$HOOC-(CH_2)_3-NH-(CH_2)_2-COOH.$$

After an eight-day acclimatization period, the plants maintained in closed environment at a temperature of between 17 and 22°C with uniform natural lighting, were each given a weekly administration of 100 cc of the aforesaid solutions.

Careful nebulization and watering was effected in order to keep the substrate in permanently good conditions of moisture.

After 6 treatments, the *Kolanchoe* plants marked B, C, D were clearly differentiated from the plants marked A, and after ten treatments the flowering was manifestly more abundant and precocious.

The colours of the petals were brighter and their dimensions were notably larger, though this variable was difficult to quantify.

After 6 treatments, the *Scheffera* and *Aralia* plants marked B, C, D were also clearly differentiated from the plants marked A. The increase in leaf size was evaluable at from 70 to 100%.

Example 3

One adult *Syngonium podofillum* plant, acclimatized for 12 months and previously given 100 cc weekly administrations of the standard fertilizer solution alone, was treated with 100 cc weekly of standard fertilizer solution+1 mg/litre of

$$NH_2-(CH_2)_4-NH-(CH_2)_2-COOH.$$

After 4 treatments, the newly put-out leaves showed size-increases of from 100% to 150%.

Example 4

Sixteen *Tradescantia zebrina* scions were planted in four pots containing washed river sand, and were marked A, B, C, D. These letters have the same meaning and stand for the same trial procedure as in Ex. 2.

The difference between the plants treated with polyaminoacid derivatives and the reference plant was clearly visible, both as to the number of leaves and as to the size of the leaves.

Example 5

Twenty young *Hedera helix* var. Fantasia plants from the same hothouse and of similar size were freed of the humus around their roots by careful washing, and were then planted in washed river sand with a distribution of five plants per pot, for a total of 4 pots.

The pots were marked respectively as follows:

A—treatment with standard fertilizer solution alone, at a rate of 100 cc/week:

B—treatment with standard fertilizer solution+1 mg/litre of

$$NH_2-(CH_2)_4-NH-(CH_2)_2-COOH,$$

at a rate of 100 cc/week;

M—treated once a month with 0.4 mg of $NH_2-(CH_2)_4-NH-(CH_2)_2-COOH$ and once a week with 100 cc of standard fertilizer solution;

UT—a "one-off" treatment was given with 1.2 mg of $NH_2-(CH_2)_4-NH-(CH_2)_2-COOH$ and a weekly treatment was given with 100 cc of standard fertilizer solution.

The trial was started after an eight-day acclimatization period.

During the trial, the plants maintained in a closed environment, with uniform natural lighting, and at a temperature of between 17 and 22°C.

After eight weeks the plants marked B, M, UT were clearly differentiated from the plant marked A by virtue of the larger leaf size.

After 12 weeks the plants treated with the polyaminoacid derivative showed leaf-size increases ranging from 80 to 120%.

It can therefore be stated in a wholly generic manner that the invention makes it possible to obtain an elevated degree of growth of the leaves in the plants treated.

In this regard it can be noted that histological examination with the electron microscope of the leaves of the reference plants and those of the plants treated with the compounds forming subject matter of the invention confirmed that there was no cell enlargement and that the larger size of the leaves is caused solely by an increase in the number of the cells.

Moreover, the treatment with said compounds in no way altered the exterior appearance of the species tested (bright green leaf, spotted with ivory-yellow). The decomposition products formed by said compounds during the plant growth process were nontoxic and biodegradable: they are substances normally found among the metabolities existing naturally in a growth and reproduction cycle.

It is concluded from the overall results of the trials that the test products promote cell reproduction in the plants by a mechanism of improved absorption and utilization of the nutrient substances administered.

This conclusion is confirmed by the results obtained in conditions of fertilization below those considered by the known art.

From which it follows that the invention makes it possible to employ a quantity of fertilizer smaller than that used by the known art, with the evident resulting advantages of economic saving and a diminution of environmental polution.

**Claims**

1. Use as plant growth promotors of the compounds having general formula:

$$X—(R)_m—NH—(R')_n—COOH$$

wherein: X=COOH or $NH_2$ m is an integer between 2 and 6, and n=2 or 3, and R and R' represent a straight or branched alkylene chain.

2. Plant growth promoting composition, characterized in that it comprises at least one compound according to claim 1 and a fertilizer.

**Patentansprüche**

1. Anwendung von Verbindungen der allgemeinen Formel

$$X—(R)_m—NH—(R')_n—COOH,$$

worin X=COOH oder $NH_2$, m eine ganze Zahl zwischen 2 und 6 und n=2 oder 3 ist und R und R' eine gerad- oder verzeigtkettige Alkylengruppe bedeuten, als Pflanzenwachstumspromoteren.

2. Zusammensetzung von Pflanzenwachstumspromotoren, dadurch gekennzeichnet, daß sie wenigstens eine Verbindung nach Anspruch 1 und ein Düngemittel enthält.

**Revendications**

1. Utilisation, comme promoteurs de la croissance des plantes, des composées de formule générale:

$$X—(R)_m—NH—(R')_n—COOH$$

dans laquelle: X=COOH ou $NH_2$; m est une entier entre 2 et 6, et n=2 ou 3, et R et R' représentent une chaîne alkylène droite ou ramifiée.

2. Composition pour la promotion de la croissance des plantes, caractérisée par le fait qu'elle comprend au moins un composé selon la revendication 1 et un fertilisant.